# EUROPEAN PATENT APPLICATION

(11) **EP 3 409 353 A1**
(43) Date of publication of application: **05.12.2018**
(21) Application number: 17823605.5
(22) Date of filing: 04.07.2017
(51) Int. Cl.: B01J 19/12, B01J 19/08, B01J 8/00, H01F 13/00

(54) **VIRTUAL PHOTON CATALYTIC DEVICE AND METHOD FOR CATALYTIC TREATMENT USING SAME**

(30) Priority: 04.07.2016 CN 201610518807
(71) Applicant: Harbin Wanyu Technology Co. Ltd, Harbin, Heilongjiang 150060 (CN)
(72) Inventor: WAN, Yu, Harbin Heilongjiang 150060 (CN); WAN, Xiaomao, Harbin Heilongjiang 150060 (CN); LI, Xin, Harbin Heilongjiang 150060 (CN)
(74) Representative: Grünecker Patent- und Rechtsanwälte PartG mbB
(86) International application number: PCT/CN2017/091632
(87) International publication number: WO 2018/006793

(57) **Abstract**

The present invention relates to a virtual photon catalysis apparatus and a method for catalytic treatment using the virtual photon catalysis apparatus. The virtual photon catalysis apparatus includes a housing; and a catalysis unit built in the housing, including a rectangular magnet group, a magnetic force enhancing post, and a magnetically permeable shoe, where an SS pole and an NN pole of a rectangular magnet in the rectangular magnet group form a magnetic field line of a corresponding magnetic field center, the magnetic force enhancing post is used for enhancing a magnetic force from the magnetic field center to a corresponding magnetic field edge, and the magnetically permeable shoe transfers and centralizes the magnetic field from the magnetic field center to the corresponding magnetic field edge, where an angle between junctions between two ends of the magnetically permeable shoe and a central wall of the magnetically permeable shoe is greater than 90 degrees. In the present invention, magnetic conduction is performed by using the magnetically permeable shoe whereof an angle between the junctions between two ends and a central wall is greater than 90 degrees, and an intensity of a magnetic field from a magnetic field center to a magnetic field edge of the catalysis apparatus is increased by using the magnetic force enhancing post. Such a structure improves efficiency of catalytic treatment and can be widely applied to catalytic, accelerated cracking, or polymerization reactions of various substances, and treatment on water for crop growth and civil use.

## Description

### BACKGROUND

### Technical Field

The present invention relates to the technical field of catalysis, and specifically, to a virtual photon catalysis apparatus and a method for catalytic treatment using the virtual photon catalysis apparatus.

### Related Art

From perspective of quantum mechanics, a pure magnetic field and a pure electric field are effects produced by virtual photons. Theoretically, a photon is a medium by means of which an electromagnetic action is revealed.

A working principle of an existing magnetization apparatus is performing magnetization treatment by using a planar magnetic field of a magnet. A common magnetization apparatus is bar-shaped steel magnet structures parallel to each other or a corresponding gap magnetic cavity constituted by circular magnetic cylinders.

The magnetic field formed by the apparatus cannot be properly used in the foregoing magnetization method because a magnetic field intensity of a magnetic field center is different from that of a magnetic field edge, and when the magnetic field intensities are applied to a magnetized one, utilization ratios are different. Consequently, magnetization treatment is incomplete, resulting in low efficiency of a chemical reaction and an unapparent use effect of the magnetization apparatus.

### SUMMARY

Embodiments of the present invention provide a catalysis apparatus and a method for catalytic treatment by using the catalysis apparatus. This catalysis apparatus performs magnetic conduction by using a magnetically permeable shoe whereof an angle between the junctions between two ends of the magnetically permeable shoe and a central wall of the magnetically permeable shoe is greater than 90 degrees, and increases an intensity of a magnetic field from a magnetic field center to a magnetic field edge of the catalysis apparatus by using a magnetic force enhancing post, where the angle between the junctions between the two ends of the magnetically permeable shoe and the central wall of the magnetically permeable shoe ranges from 91 degrees to 180 degrees and is preferably 145 degrees. Such a structure above improves a magnetic field intensity of catalysis and efficiency of catalytic treatment, thereby saving energy resources.

According to a first aspect, an embodiment of the present invention provides a virtual photon catalysis apparatus, including:
a housing; and
a catalysis unit built in the housing, including a rectangular magnet group, a magnetic force enhancing post, and a magnetically permeable shoe, where an SS pole and an NN pole of a rectangular magnet in the rectangular magnet group form a magnetic field line of a corresponding magnetic field center, the magnetic force enhancing post is used for enhancing a magnetic force from the magnetic field center to a corresponding magnetic field edge, and the magnetically permeable shoe transfers and centralizes the magnetic field from the magnetic field center to the corresponding magnetic field edge, where an angle between junctions between two ends of the magnetically permeable shoe and a central wall of the magnetically permeable shoe is greater than 90 degrees.

Preferably, the angle between the junctions between the two ends of the magnetically permeable shoe and the central wall of the magnetically permeable shoe ranges from 91 degrees to 180 degrees.

Preferably, the angle between the junctions between the two ends of the magnetically permeable shoe and the central wall of the magnetically permeable shoe is preferably 145 degrees. Preferably, the magnetic field at the magnetic field center approaches zero.

According to a second aspect, an embodiment of the present invention provides a method for catalytic treatment by using the virtual photon catalysis apparatus according to the first aspect, including the following steps:
a) receiving a to-be-catalyzed substance through an input pipe;
b) enhancing a magnetic force of the catalysis apparatus by using a catalysis unit built in a housing, the catalysis unit including a rectangular magnet group, a magnetic force enhancing post, and a magnetically permeable shoe, where an SS pole and an NN pole of a rectangular magnet in the rectangular magnet group form a magnetic field line of a corresponding magnetic field center, the magnetic force enhancing post is used for enhancing a magnetic force from the magnetic field center to a corresponding magnetic field edge, and the magnetically permeable shoe transfers and centralizes the magnetic field from the magnetic field center to the corresponding magnetic field edge, where an angle between junctions between two ends of the magnetically permeable shoe and a central wall of the magnetically permeable shoe is greater than 90 degrees; and
c) outputting a substance obtained by means of catalytic treatment through an output pipe in communication with the input pipe. Preferably, the angle between the junctions between the two ends of the magnetically permeable shoe and the central wall of the magnetically permeable shoe ranges from 91 degrees to 180 degrees.

Preferably, the angle between the junctions between the two ends of the magnetically permeable shoe and the central wall of the magnetically permeable shoe is preferably 145 degrees. Preferably, the magnetic field at the magnetic field center approaches zero.

In the catalysis apparatus provided by the present invention, the magnetic force enhancing post of the catalysis unit is used for enhancing the magnetic force from the magnetic field center to the corresponding magnetic field edge, and the magnetically permeable shoe of the catalysis unit transfers and centralizes the magnetic field from the magnetic field center to the corresponding magnetic field edge, where the angle between the junctions between the two ends of the magnetically permeable shoe and the central wall of the magnetically permeable shoe is greater than 90 degrees. In particular, the angle between the junctions between the two ends of the magnetically permeable shoe and the central wall of the magnetically permeable shoe is greater than 90 degrees. Such a structure above improves efficiency of catalytic treatment and reduces consumption of a to-be-catalyzed substance.

### BRIEF DESCRIPTION OF THE DRAWINGS

FIG. 1 is a schematic structural diagram of a virtual photon catalysis apparatus according to an embodiment of the present invention;
FIG. 2 is a curve of variation of fuel consumption as a rotation speed varies before and after catalysis is performed by using a photon catalysis apparatus according to an embodiment of the present invention;
FIG. 3 is a schematic structural diagram when an angle between junctions between two ends of a magnetically permeable shoe and a central wall of the magnetically permeable shoe is 145 degrees;
FIG. 4 is a schematic flowchart of a method for catalytic treatment by using the virtual photon catalysis apparatus according to an embodiment of the present invention; and
FIG. 5 is a schematic structural diagram of a catalysis apparatus according to the present invention in actual application.

### DETAILED DESCRIPTION

Embodiments of the present invention provide a virtual photon catalysis apparatus, wherein a catalysis unit is used for enhancing a magnetic force from a magnetic field center to a magnetic field edge, and after a catalytic treatment process is completed, an output pipe is used for outputting a corresponding substance obtained by means of catalytic treatment.

The technical solutions of the present invention are further described below in detail with reference to the accompanying drawings and embodiments.

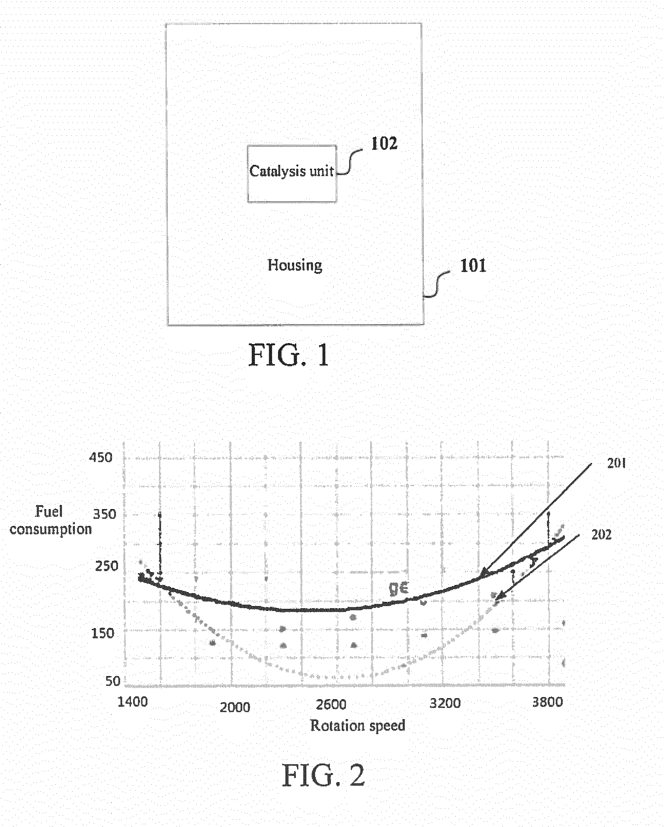

FIG. 1 shows a virtual photon catalysis apparatus according to an embodiment of the present invention. The apparatus includes: a housing 101, a catalysis unit 102, and a output pipe (not shown in FIG. 1).

The catalysis unit 102 built in the housing 101 includes a rectangular magnet group, a magnetic force enhancing post, and a magnetically permeable shoe, where an SS pole and an NN pole of a rectangular magnet in the rectangular magnet group form a magnetic field line of a corresponding magnetic field center, the magnetic force enhancing post is used for enhancing a magnetic force from the magnetic field center to a corresponding magnetic field edge, and the magnetically permeable shoe transfers and concentrates the magnetic field from the magnetic field center to the corresponding magnetic field edge, where an angle between junctions between two ends of the magnetically permeable shoe and a central wall of the magnetically permeable shoe is greater than 90 degrees, and the magnetically permeable shoe is in a specific shape.

It is particularly noted that the angle between the junctions between the two ends of the magnetically permeable shoe and the central wall of the magnetically permeable shoe is greater than 90 degrees. The angle between the junctions between the two ends of the magnetically permeable shoe and the central wall of the magnetically permeable shoe ranges from 91 degrees to 180 degrees and is preferably 145 degrees. Such a structure above improves efficiency of catalytic treatment and reduces consumption of a to-be-catalyzed substance.

A to-be-catalyzed substance is received through an input pipe. Catalytic treatment is performed on the to-be-catalyzed substance inside the catalysis unit. After the catalytic treatment process is completed, a substance obtained by means of the catalytic treatment is output through the output pipe in communication with the input pipe.

The catalysis apparatus of the present invention utilizes a virtual photon effect of a magnetic field to transform the to-be-catalyzed substance to an excimer state, to enable it to react fully. The to-be-catalyzed substance to which the catalysis apparatus of the present invention is applicable is not limited to various chemicals, and the catalysis apparatus of the present invention is also applicable to various treatment on water for civil and industrial use and agricultural use.

It should be noted that the substance obtained by means of the catalytic treatment is a substance in an excimer state. Because the substance obtained by means of the catalytic treatment is in the excimer state, it can burn more fully when it burns, so that a heat value of the substance is greatly increased. In addition, because a combustible substance in the excimer state is extremely unstable, and restores its state before catalysis soon, to produce a better catalytic effect and improve catalytic efficiency, the virtual photon catalysis apparatus provided by the embodiments of the present invention is mounted at an entrance of a combustion chamber to perform catalysis.

It should be noted that the housing 101 may be made from a magnetically impermeable material. An SS pole and an NN pole of a rectangular magnet in the rectangular magnet group of the catalysis unit 102 form a magnetic field line of a corresponding magnetic field center, and when the SS pole and the NN pole of the rectangular magnet in the rectangular magnet group are opposite to each other, the magnetic field line of the magnetic field center approaches zero. It should be noted that the magnetic field at the magnetic field center of the virtual photon catalysis apparatus provided b the embodiments of the present invention approaches zero.

It is proved by experimental results that not only the magnetic force enhancing post in the catalysis unit 102 can enhance the magnetic force from the magnetic field center to the magnetic field edge, but also it should be specially noted that the catalysis unit 102 further includes a magnetically permeable shoe capable of enhancing each magnetic field center-to-edge magnetic force. In addition, an angle between junctions between two ends of the magnetically permeable shoe and a central wall of the magnetically permeable shoe is greater than 90 degrees. The angle between the junctions between the two ends of the magnetically permeable shoe and the central wall of the magnetically permeable shoe ranges from 91 degrees to 180 degrees and is preferably 145 degrees.

By means of the magnetic force enhancing post and the magnetically permeable shoe having a specific shape in the catalysis unit 102, an angle between junctions between two ends of the magnetically permeable shoe and a central wall being greater than 90 degrees, such a structure above not only improves efficiency of catalytic treatment, but also reduces consumption of the to-be-catalyzed substance.

By means of the magnetic force enhancing post and the magnetically permeable shoe in the specific shape in the catalysis unit 102, the magnetic force is increased by 25% to 35%. Specifically, the magnetic force enhancing post and the magnetically permeable shoe in a specific shape in the catalysis unit 102 can increase each magnetic field center-to-edge magnetic force by 30%. Details of a specific magnetic force enhancing manner are not described herein.

The catalysis apparatus provided by the embodiments of the present invention can enable a more complete catalytic reaction. Therefore, catalytic performance of the catalysis apparatus is favorable.

FIG. 2 is a curve of variation of fuel consumption as a rotation speed varies before and after catalysis is performed by using a photon catalysis apparatus according to an embodiment of the present invention. As shown in FIG. 2, when catalysis is performed without using the photon catalysis apparatus provided by the embodiments of the present invention, a curve 201 of variation of fuel consumption as a rotation speed varies is relatively smooth, and correspondingly, fuel consumption is high. Further, when catalysis is performed by using the photon catalysis apparatus provided by the embodiments of the present invention, a curve 202 of variation of fuel consumption as a rotation speed varies is steeper compared with the foregoing curve 201, and correspondingly, fuel consumption is correspondingly lowered.

It should be noted that a rotation speed unit and a fuel consumption unit in the curve of FIG. 2 are relative values, where no unit is marked in FIG. 2, and are merely used for showing a variation tendency of the fuel consumption as the rotation speed varies.

It could be learned from the two curves in FIG. 2 that in a curve of variation of fuel consumption as a rotation speed varies obtained by testing an engine bench, by using the virtual photon catalysis apparatus provided by the embodiments of the present invention, the fuel consumption curve has a large reduction of at least approximately 25%.

Hence, it is further indicated by test data that in the catalysis apparatus provided by the present invention, the magnetic force enhancing post of the catalysis unit is used for enhancing the magnetic force from the magnetic field center to the corresponding magnetic field edge, and the magnetically permeable shoe of the catalysis unit transfers and centralizes the magnetic field from the magnetic field center to the corresponding magnetic field edge, where the angle between the junctions between the two ends of the magnetically permeable shoe and the central wall of the magnetically permeable shoe is greater than 90 degrees. In particular, the angle between the junctions between the two ends of the magnetically permeable shoe and the central wall of the magnetically permeable shoe is greater than 90 degrees. Such a structure above improves efficiency of catalytic treatment and reduces consumption of a to-be-catalyzed substance.

In actual use, the catalysis apparatus has a strong catalytic capability and high catalytic efficiency, thereby saving fuel, so that a maximum fuel saving rate of the fuel can reach 29.10%, which is far higher than a maximum fuel saving rate of an existing catalysis apparatus. It should be noted that catalytic performance of the virtual photon catalysis apparatus provided by the embodiments of the present invention is tested by using an engine test bench, and a test result show that: after fuel of an engine is catalyzed by using the virtual photon catalysis apparatus provided by the embodiments of the present invention, fuel consumption of the engine at a normal rotation rate has a greatly reducing tendency.

In conclusion, in addition to being applied to catalytic and polymerization reactions of various substances, the virtual photon catalysis apparatus provided by the embodiments of the present invention may be further applied to crop production to increase a yield of crops, or may be further applied to a process of treating water for civil use, so as to obtain weak alkaline water beneficial to health. Specific application instances in other fields are similar to those of the foregoing fuel, and are described herein again. Refer to descriptions in the corresponding parts.

To further improve stability of the to-be-catalyzed substance in the excimer state, the catalysis unit should be mounted at an entrance of a combustion chamber if possible to prevent the catalyzed substance from restoring its state before catalytic treatment soon.

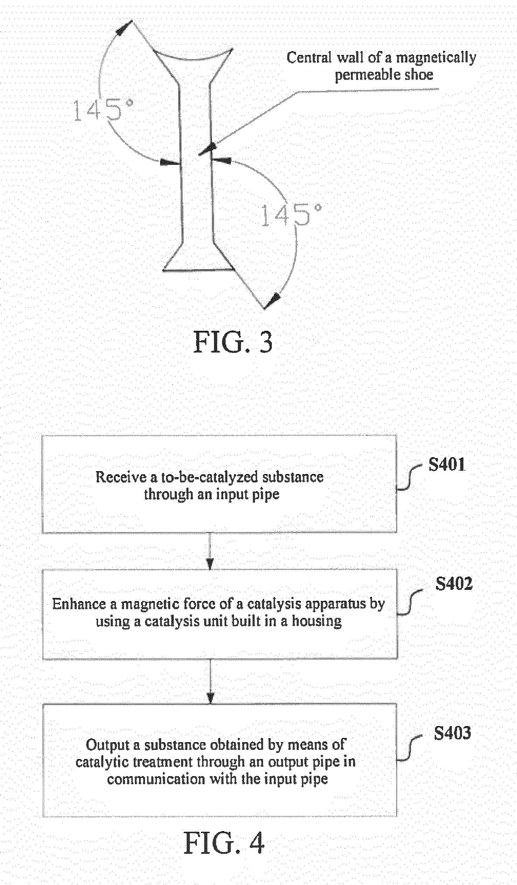

FIG. 3 is a schematic structural diagram when an angle between junctions between two ends of a magnetically permeable shoe and a central wall of the magnetically permeable shoe is 145 degrees. As shown in FIG. 3, a magnetic conduction effect of the magnetically permeable shoe at this time is best.

In the catalysis apparatus provided by the embodiments of the present invention, the magnetic force enhancing post of the catalysis unit is used for enhancing the magnetic force from the magnetic field center to the corresponding magnetic field edge, and the magnetically permeable shoe of the catalysis unit transfers and centralizes the magnetic field from the magnetic field center to the corresponding magnetic field edge, where the angle between the junctions between the two ends of the magnetically permeable shoe and the central wall of the magnetically permeable shoe is greater than 90 degrees. In particular, the angle between the junctions between the two ends of the magnetically permeable shoe and the central wall of the magnetically permeable shoe is greater than 90 degrees. Such a structure above improves efficiency of catalytic treatment and reduces consumption of a to-be-catalyzed substance.

FIG. 4 is a schematic flowchart of a method for catalytic treatment by using the virtual photon catalysis apparatus according to an embodiment of the present invention. The foregoing catalysis apparatus provided by the embodiments of the present invention is used for implementing the method for catalytic treatment provided by the embodiments of the present invention. As shown in FIG. 4, this embodiment of the present invention includes the following steps:
Step 401: Receive a to-be-catalyzed substance through an input pipe.
Step 402: Enhance a magnetic force of the catalysis apparatus by using a catalysis unit built in a housing, the catalysis unit including a rectangular magnet group, a magnetic force enhancing post, and a magnetically permeable shoe, where an SS pole and an NN pole of a rectangular magnet in the rectangular magnet group form a magnetic field line of a corresponding magnetic field center, the magnetic force enhancing post is used for enhancing a magnetic force from the magnetic field center to a corresponding magnetic field edge, and the magnetically permeable shoe transfers and centralizes the magnetic field from the magnetic field center to the corresponding magnetic field edge, where an angle between junctions between two ends of the magnetically permeable shoe and a central wall of the magnetically permeable shoe is greater than 90 degrees. The angle between the junctions between the two ends of the magnetically permeable shoe and the central wall of the magnetically permeable shoe is greater than 90 degrees, and the magnetically permeable shoe is in a specific shape.

It is particularly noted that the angle between the junctions between the two ends of the magnetically permeable shoe and the central wall of the magnetically permeable shoe is greater than 90 degrees. The angle between the junctions between the two ends of the magnetically permeable shoe and the central wall of the magnetically permeable shoe ranges from 91 degrees to 180 degrees and is preferably 145 degrees. Such a structure above improves efficiency of catalytic treatment and reduces consumption of a to-be-catalyzed substance.

It should be noted that in step 402, the magnetic field at the magnetic field center approaches zero.

Step 403: Output a substance obtained by means of catalytic treatment through an output pipe in communication with the input pipe.

To further improve stability of the to-be-catalyzed substance in the excimer state, an output port should be provided as close to an engine as possible to prevent the catalyzed substance from restoring its state before catalytic treatment soon.

In the method for catalytic treatment by using the catalysis apparatus provided by the embodiments of the present invention, the magnetic force enhancing post of the catalysis unit in the virtual photon catalysis apparatus is used for enhancing the magnetic force from the magnetic field center to the corresponding magnetic field edge, and the magnetically permeable shoe of the catalysis unit transfers and centralizes the magnetic field from the magnetic field center to the corresponding magnetic field edge, where the angle between the junctions between the two ends of the magnetically permeable shoe and the central wall of the magnetically permeable shoe is greater than 90 degrees. In particular, the angle between the junctions between the two ends of the magnetically permeable shoe and the central wall of the magnetically permeable shoe is greater than 90 degrees. The method for catalytic treatment by using the virtual photon catalysis apparatus as shown in FIG. 1 not only can enhance a magnetic force from a magnetic field center to a magnetic field edge, but also can improve efficiency of performing catalytic treatment on a to-be-catalyzed substance, thereby saving the to-be-catalyzed substance.

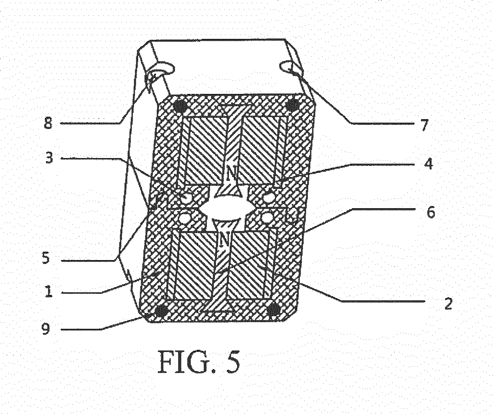

FIG. 5 is a schematic structural diagram of a catalysis apparatus according to the present invention, where 1 is an aluminum housing, 2 is a neodymium iron boron magnet, 3 is a magnetically permeable cylinder, 4 is a magnetic spacer, 5 is a guide foot, 6 is a pole shoe, 7 is a stopping top thread, 8 is a fastening screw, and 9 is a rivet.

The catalysis apparatus of the present invention utilizes a virtual photon effect of a magnetic field. From perspective of quantum mechanics, a pure magnetic field and a pure electric field are effects produced by virtual photons. Theoretically, a photon is a medium by means of which an electromagnetic action is revealed. The to-be-catalyzed substance to which the catalysis apparatus of the present invention is applicable is not limited various fuels, and the catalysis apparatus of the present invention is also applicable to various combustible gases, combustible liquids, and combustible materials such as alcohol.

It could be learned from the structure shown in FIG. 5 that the catalysis apparatus of the present invention includes two groups each including a symmetric housing 1, a neodymium iron boron magnet 2, a magnetically permeable cylinder 3, a magnetic spacer 4, a guide foot 5, a pole shoe 6, a stopping top thread 7, and a fastening screw 8 fixed on a fuel path or gas path.

It is proved by test results that the catalysis apparatus provided by the present invention has a strong catalytic capability and high catalytic efficiency, thereby saving fuel, so that a fuel saving rate of fuel ranges from 22.78% to 29.10%, and a maximum fuel saving rate of the catalysis apparatus can reach 29.10%, which is far higher than a maximum fuel saving rate of an existing catalysis apparatus.

The foregoing specific implementations further describe the objectives, technical solutions, and beneficial effects of the present invention in detail. It should be understood that the foregoing descriptions are merely specific implementations of the present invention and are not intended to limit the protection scope of the present invention. Any modifications, equivalent replacements, and improvements made without departing from the spirit and principle of the present invention shall all fall within the protection scope of the present invention.

## Claims

1. A virtual photon catalysis apparatus, comprising:
a housing; and
a catalysis unit built in the housing, comprising a rectangular magnet group, a magnetic force enhancing post, and a magnetically permeable shoe, wherein an SS pole and an NN pole of a rectangular magnet in the rectangular magnet group form a magnetic field line of a corresponding magnetic field center, the magnetic force enhancing post is used for enhancing a magnetic force from the magnetic field center to a corresponding magnetic field edge, and the magnetically permeable shoe transfers and centralizes the magnetic field from the magnetic field center to the corresponding magnetic field edge, wherein an angle between junctions between two ends of the magnetically permeable shoe and a central wall of the magnetically permeable shoe is greater than 90 degrees.

2. The catalysis apparatus according to claim 1, wherein the angle between the junctions between the two ends of the magnetically permeable shoe and the central wall of the magnetically permeable shoe ranges from 91 degrees to 180 degrees.

3. The catalysis apparatus according to claim 2, wherein the angle between the junctions between the two ends of the magnetically permeable shoe and the central wall of the magnetically permeable shoe is preferably 145 degrees.

4. The catalysis apparatus according to claim 1, wherein the magnetic field at the magnetic field center approaches zero.

5. A method for catalytic treatment by using the virtual photon catalysis apparatus according to any one of claims 1 to 4, comprising the following steps:
a) receiving a to-be-catalyzed substance through an input pipe;
b) enhancing a magnetic force of the catalysis apparatus by using a catalysis unit built in a housing, the catalysis unit comprising a rectangular magnet group, a magnetic force enhancing post, and a magnetically permeable shoe, wherein an SS pole and an NN pole of a rectangular magnet in the rectangular magnet group form a magnetic field line of a corresponding magnetic field center, the magnetic force enhancing post is used for enhancing a magnetic force from the magnetic field center to a corresponding magnetic field edge, and the magnetically permeable shoe transfers and centralizes the magnetic field from the magnetic field center to the corresponding magnetic field edge, wherein an angle between junctions between two ends of the magnetically permeable shoe and a central wall of the magnetically permeable shoe is greater than 90 degrees; and
c) outputting a substance obtained by means of catalytic treatment through an output pipe in communication with the input pipe.

6. The method according to claim 5, wherein the angle between the junctions between the two ends of the magnetically permeable shoe and the central wall of the magnetically permeable shoe ranges from 91 degrees to 180 degrees.

7. The method according to claim 6, wherein the angle between the junctions between the two ends of the magnetically permeable shoe and the central wall of the magnetically permeable shoe is preferably 145 degrees.

8. The method according to claim 5, wherein the magnetic field at the magnetic field center approaches zero.
